# EUROPEAN PATENT SPECIFICATION

(11) **EP 0 531 397 B1**
(45) Date of publication and mention of the grant of the patent: **01.03.1995**
(21) Application number: 91910389.5
(22) Date of filing: 05.06.1991
(51) Int. Cl.: B60R 25/08, B60T 11/10

(54) **VEHICLE ANTI-THEFT ARRANGEMENT**
DIEBSTAHLSICHERUNGSANLAGE FÜR FAHRZEUGE
INSTALLATION ANTIVOL POUR VEHICULES

(30) Priority: 06.06.1990 GB 9012624
(43) Date of publication of application: 17.03.1993
(73) Proprietor: BINDER, Noel, Pannal Harrogate HG3 1EJ (GB)
(72) Inventor: BINDER, Noel, Pannal Harrogate HG3 1EJ (GB)
(74) Representative: Johnstone, Helen Margaret
(86) International application number: GB9100902
(87) International publication number: WO9118771

(56) References cited:
- WO-A-90/06248
- GB-A- 2 035 486
- GB-A- 2 201 207
- US-A- 4 565 265

## Description

This invention relates to a vehicle anti-theft arrangement.

Many conventional vehicle anti-theft devices immobilise the front or rear wheels of the vehicle but not both and consequently do not prevent a determined thief using a towing truck or jack. Thus a valuable car or trailer containing valuable merchandise may be stolen if left unattended for sufficient time.

In my previous publication WO90/06248 I disclosed an anti-theft arrangement including a multiplicity of valves, each valve being integral with the hydraulic braking system of a respective wheel and arranged to be actuated to interrupt the supply of hydraulic fluid to said system while the brakes are engaged.

According to the present invention the vehicle anti-theft arrangement includes a primary braking circuit for service braking and a secondary braking circuit for parking braking:
the primary braking circuit including primary braking cylinders and pistons each primary cylinder being integral with a respective one of all of the wheel brake assemblies;
the secondary braking circuit including secondary braking cylinders and pistons each secondary braking cylinder being integral with a respective one of all of the wheel brake assemblies, each secondary braking cylinder incorporating a latch arranged when actuated after the parking brake has been applied to lock the secondary braking piston immobilising the respective wheel.

The latch may engage a piston of the respective cylinder directly or, more preferably closes a hydraulic supply line to the cylinder.

In use of the anti-theft arrangement a user may actuate a hand brake to engage each of the secondary cylinders. Actuation of a keyboard or other locking arrangement then closes the latches to secure the wheels in the locked state.

Subsequent cutting of brake pipes or manipulation of the hand brake does not release the locking arrangement. The vehicle cannot be moved using towing apparatus.

Each latch may comprise a solenoid actuated valve located in the casing of the wheel cylinder or brake caliper of the respective wheel. The valves are preferably deadlocking so that they remain closed when the solenoids are de-energised.

Provision of primary and secondary braking pistons allows the primary braking system to operate independently without possible interference by the anti-theft arrangement. A preferred braking arrangement may operate independently of the normal function of the hand brake.

A preferred system has the advantage that in the event of brake failure the vehicle may be brought safely to a halt using the hand brake, the vehicle being halted by all four wheels instead of two as would be the case using a conventional hand brake. This prevents a possible cause of loss of control of the vehicle.

The first piston may have greater area than the second piston so that a greater braking force is applied through the first piston. The second piston provides sufficient force to immobilise the vehicle when the latch is closed. Provision of first and second pistons in accordance with the preferred aspect of this invention has the advantage of the vehicle braking system is not inactivated in the event that a valve fails to function.

First and second pistons may be arranged to act directly upon a brake disc, callipers or other conventional braking means. The first and second braking pistons may be incorporated within a single calliper. Alternatively separate callipers may be provided. The latter arrangement is not preferred because of the complexity of manufacture.

A sensor may be arranged to provide a display, for example on the vehicle dashboard, to confirm to a user that the anti-theft arrangement is safely deactivated and that accidental application of the locking system is prevented. The display may also serve to alert a user to any malfunction in the locking arrangement, for example if one of the latches becomes seized. The latch may comprise a pin or other member arranged to engage and secure a latch member when the latter is in the open unlocked condition.

The anti-theft arrangement may further comprise one or more security systems, one embodiment of which may be a keyboard which prevents unlocking of a braking system. This may be used linked to solenoids which may be mounted to all doors, locks, boots and bonnets, thus preventing the vehicle from being removed or opened by any unauthorised person without the private code, codes, private identification number or words of the owner.

Removal of the vehicle is prevented as the number or code must be correctly entered, preferably within a specified time to activate the release of the anti-theft arrangement. Alternative arrangements for example using a magnetically coded card or a key may be employed.

The invention is further described by means of example, but not in any limitative sense, with references to the accompanying drawings, of which:
Figure 1 illustrates the braking system of a vehicle incorporating an anti-theft arrangement in accordance with this invention; and
Figure 2 is a cross-sectional view of a wheel assembly shown in Figure 1.

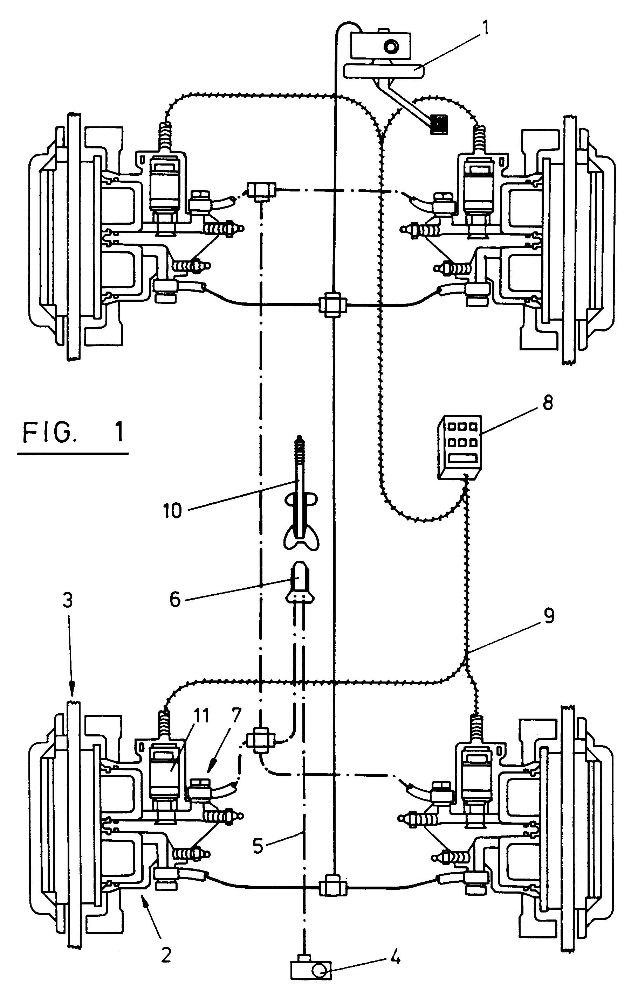

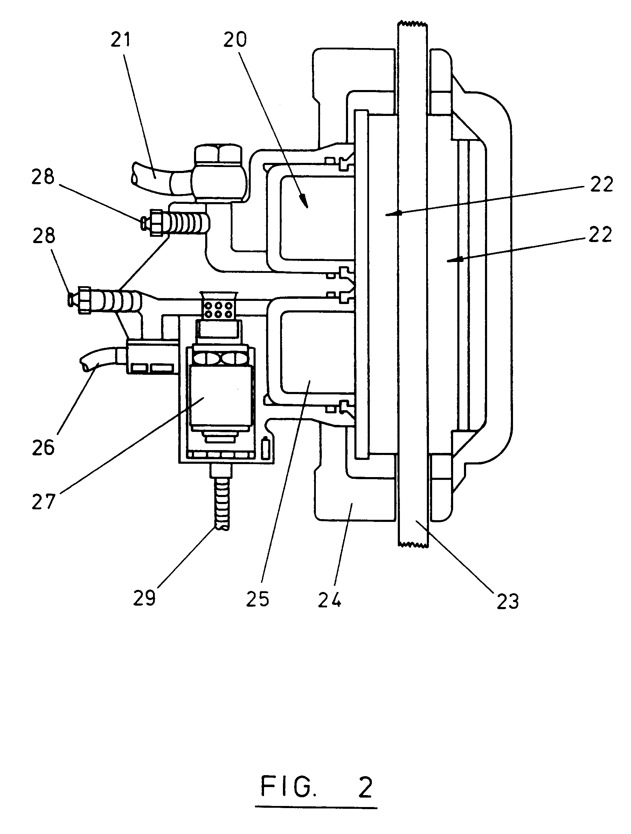

The arrangement shown in Figure 1 includes a conventional brake pedal 1 connected by a conventional hydraulic brake pipe to the brake cylinders 2 of respective wheels 3 of the vehicle. A secondary braking reservoir 4 communicates via a brake pipe 5 with an actuator 6 connected to the hand brake 10. When the hand brake 10 is applied, brake fluid is driven by the actuator 6 through a brake pipe system which is separate from the main brake pipe to secondary braking cylinders 7 on each of the vehicle wheels 3. The secondary cylinders 7 are integral with the wheel brake assemblies and the pistons of the secondary cylinders act directly on the brake discs. The construction of the wheel brake assembly, is described in greater detail with reference to Figure 2. An electronic keyboard or other means for entering a private identification number or code 8 is connected to each of the solenoid operated latches (referred to for simplicity as "solenoids") 11 by means of an armoured conduit cable 9. The keyboard is arranged to deliver command signals to the solenoid 11 on each of the secondary cylinders 7.

The construction of the secondary cylinder 7 and solenoid 11 is shown in greater detail in Figure 2. The arrangement comprises a conventional brake piston 20 supplied by hydraulic fluid from the brake pipe 21 connected to the master cylinder by the foot brake pedal (not shown). The piston 20 acts upon brake pads 22 on the wheel disc 23 located within the housing 24. A secondary brake cylinder 25 is actuated by fluid supplied via the hand brake and brake line 26. A solenoid operated latch 27, (referred to for simplicity as a "solenoid") disposed within the housing 24 is arranged on actuation by a signal delivered through armoured cable 29, to interrupt the flow of hydraulic fluid to the secondary piston. The pressure applied to the piston is maintained when the solenoid 27 is actuated to close the brake line 26. The vehicle is thus immobilised irrespective of cutting of the brake lines or other interference with the braking system. Bleed nipples 28 serve to facilitate purging of the system in conventional manner.

The solenoid 27 is preferably deadlocking so that it remains in a closed or open state when de-energised.

The solenoid may incorporate a ratchet arrangement to ensure secure application but quick release. In alternative embodiments of the invention the solenoid 27 may act directly on the piston of the brake cylinder 25. For example when the brake cylinder 25 is urged against the brake pad 22, and the solenoid is actuated, the ram of the solenoid may bear against the piston preventing motion away from the brake pad. In a further alternative embodiment of the invention the solenoid 27 may be replaced by an actuator which operates a cam, reduction gearing or other means arranged to drive a locking member into contact with the piston. For example a worm gear actuated by a motor may be used to restrain motion of the piston. The arrangement may include a ratchet.

In use of the apparatus a driver actuates the brake pedal 1 to control the speed of the vehicle during normal driving. When he wishes to park the vehicle, application of the hand brake 10 applies pressure to the secondary cylinders 25. While the pressure is maintained, the keyboard 8 may be actuated by entering a private identification number or other code to engage the solenoids 11. The secondary pistons are thereby locked preventing release of the respective wheels. To release the antitheft arrangement, a private identification number or other code must be entered via the keyboard 8 in order to unlock the solenoids 11.

In addition to the anti-theft facility provided by the present invention, actuation of the hand brake 10 while the vehicle is in motion serves to apply braking force to each of the vehicle wheels. This may be necessary in an emergency, for example in the event of failure of the primary braking system. All of the vehicle wheels are engaged preventing possible loss of control of the vehicle.

The secondary pistons may have a smaller area than the primary pistons 20 so that less braking force is applied by them. In preferred embodiments of the invention the force is sufficient to prevent motion of the vehicle when at rest. The sufficient braking of the vehicle is not inhibited in the event of failure of the anti-theft system.

## Claims

1. A vehicle anti-theft arrangement including a primary braking circuit for service braking and a secondary braking circuit for parking braking:
the primary braking circuit including primary braking cylinders (2) and pistons (20) each primary braking cylinder (2) being integral with a respective one of all of the wheel brake assemblies;
the secondary braking circuit including secondary braking cylinders (7) and pistons (25) each secondary braking cylinder (7) being integral with a respective one of all of the wheel brake assemblies, each secondary braking cylinder (7) incorporating a latch (27) arranged when actuated after the parking brake has been applied to lock the secondary braking piston (25) immobilising the respective wheel (3).

2. A vehicle as claimed in Claim 1, wherein the latch (27) is arranged to close a hydraulic supply line (26) to the secondary cylinder (2).

3. A vehicle as claimed in Claim 1 wherein the latch (27) engages the piston (25) of the secondary cylinder (2) directly.

4. A vehicle as claimed in Claim 2 wherein the latch (27) comprises a solenoid actuated valve (11).

5. A vehicle as claimed in Claim 4 wherein said valve (11) is deadlocking.

6. A vehicle as claimed in any preceding claim wherein said primary brake piston (20) has an area greater than said secondary brake piston (25).

7. A vehicle as claimed in any preceding claim wherein said first (20) and second pistons (25) are arranged to act directly on a single brake disc (23) or calliper (22) of the said vehicle wheel (3).

8. A vehicle as claimed in Claim 3 wherein said latch (27) includes a member arranged to secure the latch (27) in an open condition.

## Patentansprüche

1. Diebstahlsicherungsanlage für Fahrzeuge mit einem primären Bremskreis zur Arbeitsbremsung und einem zweiten Bremskreis zur Parkbremsung, wobei
der primäre Bremskreis primäre Bremszylinder (2) und Kolben (20) enthält und jeder primäre Bremszylinder (2) integraler Bestandteil jeweils einer von allen Radbremsanordnungen ist;
der sekundäre Bremskreis sekundäre Bremszylinder (7) und Kolben (25) enthält, jeder sekundäre Bremszylinder (7) integraler Bestandteil jeweils einer von allen Radbremsanordnungen ist und jeder sekundäre Bremszylinder (7) eine Sperre (27) enthält, die so eingerichtet ist, daß sie den sekundären Bremskolben (25) verriegelt und so das entsprechende Rad (3) unbeweglich macht, wenn sie bei eingelegter Parkbremse betätigt wird.

2. Diebstahlsicherungsanlage nach Anspruch 1, bei welcher die Sperre (27) so eingerichtet ist, daß sie eine hydraulische Versorgungsleitung (26) zum sekundären Zylinder (2) verschließt.

3. Diebstahlsicherungsanlage nach Anspruch 1, bei welcher die Sperre (27) direkt an dem Kolben (25) des sekundären Zylinders (2) angreift.

4. Diebstahlsicherungsanlage nach Anspruch 2, bei welcher die Sperre (27) ein Solenoid-betätigtes Ventil (11) umfaßt.

5. Diebstahlsicherungsanlage nach Anspruch 4, bei welcher das Ventil (11) ohne Bestromung stehen bleibt.

6. Diebstahlsicherungsanlage nach einem der vorhergehenden Ansprüche, bei welcher der primäre Bremskolben (20) eine größere Fläche als der sekundäre Bremskolben (25) aufweist.

7. Diebstahlsicherungsanlage nach einem der vorhergehenden Ansprüche, bei welcher der erste (20) und der zweite Kolben (25) so eingerichtet sind, daß sie direkt auf eine einzelne Bremsscheibe (23) oder auf einen Kaliber (22) des Fahrzeugrades (3) einwirken.

8. Diebstahlsicherungsanlage nach Anspruch 3, bei welcher die Sperre (27) ein Glied enthält, welches so eingerichtet ist, daß es die Sperre (27) in der Offenstellung festlegt.

## Revendications

1. Installation antivol pour véhicule comprenant un circuit principal de freinage de service et un circuit secondaire de freinage de parking,
le circuit principal de freinage comprenant des cylindres et des pistons principaux de freinage, chaque ensemble de freinage d'une roue comprenant respectivement, de façon solidaire, un desdits cylindres principaux de freinage,
le circuit secondaire de freinage comprenant des cylindres et des pistons secondaires de freinage, chaque ensemble de freinage d'une roue comprenant respectivement, de façon solidaire, un desdits cylindres secondaires de freinage,
chaque cylindre secondaires de freinage (7) comprenant un verrou (27) prévu pour bloquer le piston de freinage secondaire (25) immobilisant la roue (3) respective, lorsqu'il est actionné après que le freinage de parking a été activé.

2. Installation selon la revendication 1, caractérisée en ce que le verrou (27) est prévu pour fermer un conduit d'alimentation hydraulique des cylindres secondaires (2).

3. Installation selon la revendication 1, caractérisée en ce que le verrou (27) vient directement en prise avec le piston (25) du second cylindre (2).

4. Installation selon la revendication 2, caractérisée en ce que le verrou (27) comprend une électrovanne (11).

5. Installation selon la revendication 4, caractérisée en ce que l'électrovanne (11) est irréversible sans alimentation.

6. Installation selon l'une quelconque des revendications précédentes, caractérisée en ce que la surface dudit piston principal de freinage (20) est supérieure à celle dudit piston secondaire de freinage (25).

7. Installation selon l'une quelconque des revendications précédentes, caractérisée en ce que lesdits pistons principaux (20) et secondaires (25) sont prévus pour agir directement sur un disque unique ou un étrier du frein (23) ladite roue du véhicule.

8. Installation selon la revendication 3, caractérisée en ce que ledit verrou (27) comprend un élément d'immobilisation dudit verrou (27) en position ouverte.
